# EUROPEAN PATENT APPLICATION

(11) **EP 4 579 800 A1**
(43) Date of publication of application: **02.07.2025**
(21) Application number: 23907821.5
(22) Date of filing: 21.12.2023
(51) Int. Cl.: H01M 4/36, H01M 4/587, H01M 4/48, H01M 4/131, H01M 4/133, H01M 10/0525, H01M 10/058, H01M 4/02

(54) **ANODE, AND LITHIUM ION SECONDARY BATTERY COMPRISING ANODE**

(30) Priority: 23.12.2022 KR 20220182949; 19.12.2023 KR 20230186046
(71) Applicant: LG Energy Solution, Ltd., Seoul 07335 (KR)
(72) Inventor: JUNG, Yi Jin, Daejeon 34122 (KR)
(74) Representative: Goddar, Heinz J.
(86) International application number: PCT/KR2023/021295
(87) International publication number: WO 2024/136538

(57) **Abstract**

The present invention provides a negative electrode comprising a current collector and an active material layer, wherein the active material layer comprises carbon material particles and metal oxide particles, and a lithium-ion secondary battery comprising the negative electrode.

## Description

### [Technical Field]

The present application claims the benefit and priority to Korean Patent Application No. 10-2022-0182949, filed December 23, 2022, and Korean Patent Application No. 10-2023-0186046, filed December 19, 2023, the disclosure of which is incorporated herein by reference in its entirety.

The present invention relates to a negative electrode and a lithium-ion secondary battery comprising the negative electrode.

### [Related Art]

Recently, all-solid-state secondary batteries utilizing solid electrolytes as electrolytes are drawing attention. To improve the energy density of these all-solid-state secondary batteries, the use of lithium as a negative electrode active material has been proposed. The capacity density (capacity per unit weight) of lithium is about 10 times that of graphite, which is commonly used as a negative electrode active material. Therefore, by using lithium as a negative electrode active material, it is possible to increase the power output while thinning the all-solid-state secondary battery.

All-solid-state lithium-ion secondary batteries are known, for example, anodeless lithium-ion secondary batteries comprising a negative electrode active material layer comprising a metal forming an alloy with lithium and a carbon material.

The anodeless lithium-ion secondary battery as described above is driven by a mechanism in which metallic lithium is precipitated from the negative electrode active material layer and between the negative electrode active material layer and the current current collector during charging, and the metallic lithium is ionized and moved toward the positive electrode during discharging.

The negative electrode active material layer is formed of carbon material and metal material such as Ag, and the development of various materials is required to improve the driving characteristics and lifetime characteristics of the battery.

### [Prior Art Reference]

### [Patent Literature]

Korean Laid-open Patent Publication No. 10-2015-0064697

### [Detailed Description of the Invention]

### [Technical Problem]

The present invention aims to provide a negative electrode and a lithium-ion secondary battery comprising the negative electrode, which can improve the driving characteristics and lifetime characteristics of the battery.

### [Technical Solution]

To accomplish the above objective, the present invention provides a negative electrode comprising a current current collector and an active material layer, wherein the active material layer comprises carbon material particles and metal oxide particles.

Furthermore, the present invention provides a lithium-ion secondary battery including the negative electrode; a positive electrode; and an electrolyte disposed between the negative electrode and positive electrode.

### [Advantageous Effects]

The negative electrode of the present invention includes a negative electrode active material layer in the form of a mixture of carbon material particles and metal oxide particles, thereby improving the driving characteristics and lifetime characteristics of the battery.

Furthermore, by including the negative electrode active material layer, the lithium-ion secondary battery of the present invention provides excellent drive characteristics and lifetime characteristics .

### [Brief Description of Drawing]

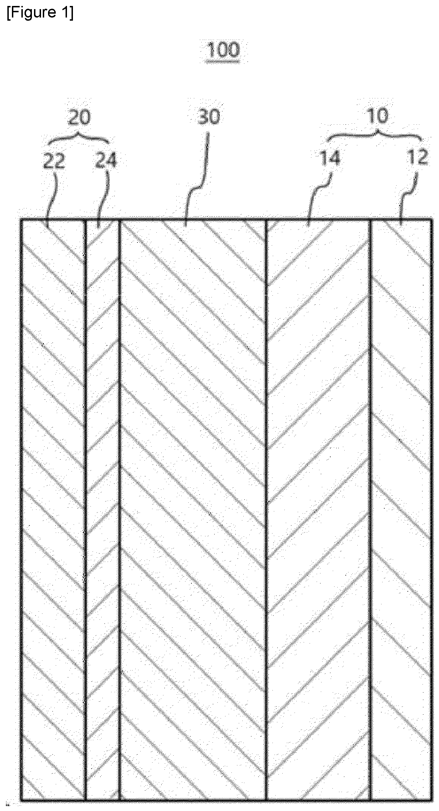

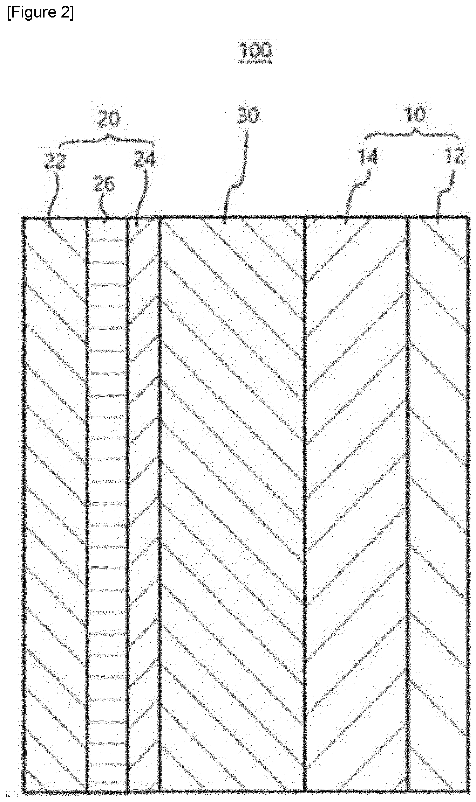

FIGs. 1 and 2 are schematic cross-sectional views of the structure of the lithium-ion secondary battery of the present invention.

### [Best Mode for Practicing the Invention]

Hereinafter, the present invention is described in more detail to facilitate an understanding of the present invention.

The terms and words used in this specification and claims are not to be construed in their ordinary or dictionary sense, but rather in a sense and concept consistent with the technical idea of the present invention, based on the principle that the inventor(s) may properly define the concept of a term to best describe his/her invention. Further, the terms used in this specification are used to describe exemplary embodiments only and are not intended to limit the present invention. The singular expression includes the plural expression unless the context clearly indicates otherwise.

When a component is referred to as being "connected to, provided with, or installed on" another component, it should be understood that it may be directly connected to or installed on that component, but there may be other components therebetween. On the other hand, when a component is referred to as being "directly connected to or installed on" another component, it should be understood that there is no other component therebetween. Other expressions that describe relationships between components, such as "on top of" and "directly on top of", "between" and "directly between", or "adjacent to" and "directly adjacent to", should be interpreted similarly.

As used herein, the term "combination" includes mixtures, alloys, and reaction products, unless otherwise noted.

The negative electrode of the present invention includes a current collector and an active material layer, wherein the active material layer comprises carbon material particles and metal oxide particles.

In one embodiment of the present invention, the metal oxide particles may be comprised in an amount of 10 to 50 parts by weight, preferably 12 to 25 parts by weight, and even more preferably 15 to 25 parts by weight, based on a total weight of 100 parts by weight of carbon material particles and metal oxide particles.

If the metal oxide is comprised in an amount of less than 10 parts by weight, it is not sufficient to form an alloy with lithium, so the benefit of lowering the alloying activation energy by the addition of the metal oxide cannot be realized, and if it exceeds 50 parts by weight, it is undesirable because it reduces the storage capacity of lithium, resulting in an overall decrease in capacity and a decrease in high rate discharge characteristics.

In one embodiment of the present invention, the ratio of the carbon material particle size (D50) to the metal oxide particle size (D50) may be 1 : 0.03 to 1.5, 1 : 0.1 to 0.7, or 1 : 0.2 to 0.7. If the metal oxide particle size ratio exceeds 1.5, the dispersibility in the electrode slurry is impaired, which reduces the coating properties and causes problems in uniformity of the electrode. In addition, if the metal oxide particle size ratio is less than 0.03, the specific surface area of the carbon material particles and the metal oxide particles is greatly increased, which is undesirable because the amount of binder and solvent to be used is greatly increased, which can cause problems in capacity reduction and resistance increase.

In one embodiment of the present invention, the carbon material particles and metal oxide particles may be included in a randomized mixture form. When the metal oxide particles coat the carbon material particles in a core-shell form, it is difficult for lithium to be inserted into the carbon material particles forming the core, which is undesirable. In particular, if the surface of the carbon material particles which is the core is coated at a high density by the metal oxide forming the shell, it is difficult for the carbon material in a core form to contact lithium, so that the content of the carbon material particles is substantially reduced. Therefore, the negative electrode has the disadvantage of being difficult to perform.

In one embodiment of the present invention, the carbon material particles may be, for example, amorphous carbon material particles. Specific examples of such amorphous carbon materials include carbon black, such as acetylene black, furnace black, or ketjen black, graphene, or combinations thereof.

If the crystallinity of the carbon material particles is high, the insertion and removal of lithium becomes difficult, which has the disadvantage of increasing the resistance of the cell.

If the amorphous carbon material particles comprise pores, the pores may have a size of 1 nm or less, preferably 0.5 nm or less. However, it may be more preferred that the amorphous carbon material particles do not contain pores. This is because, if the amorphous carbon material particles contain pores, lithium may precipitate inside the pores, and such lithium may be deactivated, and the amount of deactivated lithium may increase with repeated charge and discharge.

The pore size of the amorphous carbon material particles can be measured, for example, by nitrogen adsorption experiment or by transmission electron microscopy.

In one embodiment of the present invention, the carbon material particles may have a particle size (D50) of 10 nm to 150 nm, preferably 20 nm to 100 nm.

In one embodiment of the present invention, the carbon material particles may be carbon material particles comprising 3 to 10 at% oxygen. If the oxygen is less than 3 at%, it is undesirable because it reduces the surface roughness of the active material layer, and if it is more than 10 at%, it is undesirable because it reduces the performance of the cell due to side reactions with the solid electrolyte.

In the above, the lower limit value of the oxygen content may be 3.5 at% or more, 4 at% or more, or 4.5 at% or more. Further, the upper limit value of the content may be 9.5 at% or less, 9 at% or less, 8 at% or less, 7.5 at% or less, 7 at% or less, 6.5 at% or less, 6 at% or less, or 5.5 at% or less. The oxygen content may be a range comprising a combination of the lower and upper values. Specifically, the oxygen content may be more preferably 5 to 10 at%.

In one embodiment of the present invention, the oxygen may be present in a form incorporated into a functional group bonded to the carbon material particles. Further, the functional group may comprise one or more selected from the group consisting of a carboxylic group, a hydroxyl group, an ether group, an ester group, an aldehyde group, a carbonyl group, and an amide group.

The carbon material particles containing 3 to 10 at% oxygen can be prepared, for example, by oxidizing the carbon material. Specifically, oxygen functional group can be introduced to the surface of the carbon material by treating the carbon material with an acid and reacting with stirring the same at a temperature of 25°C to 60°C. The type of the acid is not particularly limited and can be any acid capable of introducing oxygen functional group to the surface of the carbon material. The acid may be, for example, sulfuric acid, nitric acid, or a mixture thereof, and an oxidizing agent such as potassium permanganate may also be used.

The carbon material containing oxygen can be self-produced or purchased.

The content of oxygen in the carbon material can be measured using photoelectron spectroscopy (XPS or ESCA). For example, it can be measured using a K-Alpha (Thermo Fisher Scientific) device.

In one embodiment of the present invention, the oxygen may be present on a surface of the carbon material particles. The surface does not necessarily mean the outer surface of the carbon material particle, but includes the surface of the pores, if present.

In one embodiment of the present invention, the metal oxide may be one or more selected from Al₂O₃, TiO₂, ZnO and SiO₂.

The metal oxide particles having a particle size (D50) of 10 nm to 150 nm, preferably 20 nm to 100 nm, may be used.

In one embodiment of the present invention, the active material layer may comprise 60 to 80% by weight carbon material particles, 10 to 30% by weight metal oxide particles, and 3 to 20% binder. It may also include 65 to 75% by weight carbon material particles, 20 to 30% by weight metal oxide particles, and 4 to 8% binder.

If the metal oxide particles are included in less than 10% by weight, it is undesirable because the performance improvement is not significant compared to using the carbon material particles alone, and if it exceeds 30% by weight, the amount of by-products generated by the reaction of the metal oxide and lithium increases, which increases the amount of irreversible lithium and reduces the usable capacity.

The binder may be, for example, a resin material such as styrene butadiene rubber (SBR), polytetrafluoroethylene, polyvinylidene fluoride, or polyethylene. The binder may comprise one or more selected from these resin materials.

In one embodiment of the present invention, the carbon material particles and metal oxide particles may be included in the form of a carbon material-metal oxide composite.

In an anodeless battery, the negative electrode active material layer is formed as a micro-thin film, and the problem with conventional active material composites is that it is very difficult to form a small particle size. If the particle size of the active material composite is too large compared to the thickness of a micro-thin film, it is difficult to form a negative electrode active material layer with a good surface roughness, and this decrease in surface roughness causes a decrease in the driving characteristics of the battery.

The present invention provides a dramatic improvement to the above problem of the prior art. That is, the carbon material-metal oxide composite of the present invention forms a carbon material-metal oxide composite with a significantly smaller particle size compared to the case of using a conventional carbon material. The carbon material forming the composite has the characteristics of containing at least 3 at% oxygen, being mixed well with the metal oxide particles, and being uniformly distributed with the metal oxide particles. Thus, it is possible to produce a carbon material-metal oxide composite with excellent component uniformity. Furthermore, for the above reasons, it is possible to produce a carbon material-metal oxide composite with a small and uniform particle size.

In one embodiment of the present invention, the carbon material-metal oxide composite may comprise one or more bonds selected from chemical bonds of the carbon material particles with the metal oxide particles, van der Waals bonds of the carbon material particles with the metal oxide particles, and bonds of the carbon material particles with the metal oxide particles through a binder. The chemical bond may be a bond between the metal oxide particles and oxygen contained in the carbon material.

In one embodiment of the present invention, the carbon material-metal oxide composite may comprise 60 to 80% by weight carbon material particles, 10 to 30% by weight metal oxide particles, and 3 to 20% by weight binder, based on a total weight. It can also include 65 to 75% by weight carbon material particles, 20 to 30% by weight metal oxide particles, and 4 to 8% binder, based on a total weight. The binder may be dissolved in a solvent with the carbon material particles and metal oxide particles in the wet preparation of the carbon material-metal oxide composite, in which case the carbon material-metal oxide composite may include the binder.

In one embodiment of the present invention, the particle size (D50) of the carbon material-metal oxide composite may be 0.1 µm to 0.5 µm. An upper limit of the particle size may be 0.4 µm or 0.3 µm.

Further, the maximum particle size of the carbon material-metal oxide composite may be 3 µm or less, 2 µm or less, 1.5 µm or less, 1 µm or less.

If the particle size of the carbon material-metal oxide composite is too large compared to the thickness of a micro-thin film, it is difficult to form a negative electrode active material layer with a good surface roughness, and the driving characteristics of the battery are reduced, so it is very important to produce a small particle size of the carbon material-metal oxide composite.

The reason for the deterioration of the driving characteristics of the battery is that when the surface roughness of the negative electrode active material layer is large, there is not enough contact with the electrolyte layer on the electrolyte side, and the negative electrode current collector side is not conducive to uniform precipitation of lithium.

In an anodeless lithium-ion secondary battery, the thickness of the negative electrode active material layer can be 1 µm to 100 µm, or 10 µm to 60 µm, and more specifically, 10 µm, 20 µm, 30 µm, 40 µm, or 50 µm.

For example, if a carbon material-metal oxide composite with a particle size of 10 µm is used to form a negative electrode active material layer with a thickness of 20 µm, it is obvious that it is difficult to achieve the desired surface roughness.

If the maximum particle size of the carbon material-metal oxide composite is 3 µm or less, it is desirable because the surface roughness improvement effect can be obtained more reliably. On the other hand, if the maximum particle size exceeds 3 µm, it may be difficult to obtain an excellent surface roughness when forming a thin film.

The particle size of the carbon material-metal oxide composite may be measured using a particle size analyzer. For example, it can be measured using a Mastersizer 3000 (Malvem panalytical) instrument.

The present invention provides a negative electrode active material layer comprising the carbon material-metal oxide composite.

The negative electrode active material layer has a uniform distribution of carbon materials and metal oxides and an excellent surface roughness, which provides an effect of improving the driving characteristics of the lithium-ion secondary battery including it.

Furthermore, the present invention provides a lithium-ion secondary battery including the negative electrode; a positive electrode; and an electrolyte disposed between the negative electrode and positive electrode.

The lithium-ion secondary battery may be an anodeless battery.

By including the negative electrode active material layer of the present invention, the lithium-ion secondary battery provides improved drive characteristics and lifetime characteristics .

In one embodiment of the present invention, the solid electrolyte may be a sulfide-based solid electrolyte.

In one embodiment of the present invention, the lithium-ion secondary battery may be an anodeless battery.

Hereinafter, embodiments of the present invention are described in more detail.

### <Composition of an all-solid-state lithium-ion secondary battery>

FIG. 1 is a cross-sectional view illustrating a schematic configuration of an all-solid-state lithium-ion secondary battery according to one embodiment of the present invention.

The all-solid-state lithium-ion secondary battery (100) according to one embodiment of the present invention is a so-called lithium-ion rechargeable battery that performs charge and discharge by moving lithium ions between the positive electrode (10) and the negative electrode (20). Specifically, the all-solid-state lithium-ion secondary battery (100) comprises a positive electrode (10), a negative electrode (20), and a solid electrolyte layer (30) disposed between the positive electrode (10) and the negative electrode (20), as shown in FIG. 1.

### (1) Positive electrode

As shown in FIG. 1, the positive electrode (10) includes a positive electrode current collector (12) and a positive electrode active material layer (14) disposed in sequence toward the negative electrode (20).

The positive electrode current collector (12) may be a plate or a foil. The positive electrode current collector (12) may be one metal or an alloy of two or more metals selected from, for example, indium, copper, magnesium, stainless steel, titanium, iron, cobalt, nickel, zinc, aluminum, germanium, and lithium.

The positive electrode active material layer (14) can reversibly adsorb and release lithium ions. The positive electrode active material layer (14) may include a positive electrode active material and a solid electrolyte.

The positive electrode active material may be a compound in which lithium can be inserted/removed. Examples of compounds in which lithium can be inserted or removed include LiₐA₁₋₅B'_{b}D'₂ (wherein 0.90≤a≤1.8, and 0≤b≤0.5); LiₐE_{1-b}B'_{b}O_{2-c}D'_{c} (wherein 0.90≤a≤1.8, 0≤b≤0.5, and 0≤c≤0.05); LiE_{2-b}B'_{b}O_{4-c}D'_{c} (wherein 0≤b≤0.5, and 0≤c≤0.05); LiₐNi_{1-b-c}Co_{b}B'_{c}D'_{α} (wherein 0.90≤a≤1.8, 0≤b≤0.5, 0≤c≤0.05, and 0<α≤2); LiₐNi_{1-b-c}Co_{b}B'_{c}O_{2-α}F'_{α} (wherein 0.90≤a≤1.8, 0≤b≤0.5, 0≤c≤0.05, and 0<α<2); LiₐNi_{1-b-c}Mn_{b}B'_{c}D'_{α} (wherein 0.90≤a≤1.8, 0≤b≤0.5, 0≤c≤0.05, and 0<α≤2); LiₐNi_{1-b-c}Mn_{b}B'_{c}O_{2-α}F'_{α} (wherein 0.90≤a≤1.8, 0≤b≤0.5, 0≤c≤0.05, and 0<α<2); LiₐNi_{b}E_{c}G_{d}O₂ (wherein 0.90≤a≤1.8, 0≤b≤0.9, 0≤c≤0.5, and 0.001≤d≤ 0.1); LiₐNi_{b}Co_{c}Mn_{d}GₑO₂ (wherein 0.90≤a≤1.8, 0≤b≤0.9, 0≤c≤0.5, 0≤d≤0.5, and 0.001≤e≤0.1); LiₐNiG_{b}O₂ (wherein 0.90≤a≤1.8, and 0.001≤b≤0.1); LiₐCoG_{b}O₂ (wherein 0.90≤a≤1.8, and 0.001≤b≤0.1); LiₐMnG_{b}O₂ (wherein 0.90≤a≤1.8, and 0.001≤b≤0.1); LiₐMn₂G_{b}O₄ (wherein 0.90≤a≤1.8, and 0.001≤b≤0.1); Q0₂; QS₂; LiQS₂; V₂O₅; LiV₂O₅; Lil'O₂; LiNiVO₄; Li_{(3-f)}J₂(PO₄)₃ (wherein 0≤f≤2); Li_{(3-f)}Fe₂(PO₄)₃ (wherein 0≤f≤2); and LiFePO₄.

In the above formulae, A is Ni, Co, Mn, or a combination thereof; B' is Al, Ni, Co, Mn, Cr, Fe, Mg, Sr, V, a rare earth element, or a combination thereof; D' is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

Specific examples of the positive electrode active materials include lithium cobaltate (hereinafter, referred to as LCO), lithium nickelate, lithium cobaltate, lithium nickel cobaltate, lithium nickel cobaltate (hereinafter, referred to as NCA), lithium cobalt manganate (hereinafter, referred to as NCM), lithium salts such as lithium manganate and lithium iron phosphate, and lithium sulfide. The positive electrode active material layer (14) may include only one selected from these compounds as the positive electrode active material, and may also include two or more therefrom.

The positive electrode active material may comprise a lithium salt of a transition metal oxide having a layered rock salt structure among the lithium salts described above. Here, "layered rock salt structure" means a structure in which layers of oxygen atoms and layers of metal atoms are arranged alternately and regularly in the direction of a cubic rock salt structure, resulting in each layer of atoms forming a two-dimensional plane. Also, "cubic rock salt structure" means a sodium chloride-type structure, which is one type of crystal structure. For example, "cubic rock salt structure" refers to a structure in which the face-centered cubic lattices formed by cations and anions are arranged so that they are offset from each other by 1/2 of the corners of the unit lattice.

The lithium salt of the transition metal oxide having such a layered rock salt-type structure may be, for example, a ternary lithium transition metal oxide such as LiNiₓCo_{y}Al_{z}O₂(NCA) or LiNiₓCo_{y}Mn_{z}O₂(NCM) (wherein 0 < x < 1, 0 < y < 1, 0 < z < 1, and x + y + z = 1). The positive electrode active material layer (14) may include a lithium salt of a ternary transition metal oxide having such a layered rock salt-like structure as a positive electrode active material to improve the energy density and thermal stability of the all-solid-state Lithium-ion secondary battery (100).

The shape of the positive electrode active material may be, for example, a particle shape such as a spherical shape, an ellipsoidal shape, or the like. Furthermore, the particle diameter of the positive electrode active material is not particularly limited and can be in the range applicable to positive electrode active materials of conventional all-solid-state lithium-ion secondary batteries. Furthermore, the content of the positive electrode active material in the positive electrode active material layer (14) is not particularly limited and can be within the range applicable to positive electrodes of conventional all-solid-state lithium-ion secondary batteries.

Of course, the surface of the compound can also have a coating layer, or a mixture of the compound and a compound having a coating layer. This coating layer may comprise a coating element compound of oxide or hydroxide of a coating element, oxyhydroxide of a coating element, oxycarbonate of a coating element, or hydroxycarbonate of a coating element. The compounds forming this coating layer may be amorphous or crystalline. The coating elements included in the coating layer may include Mg, Al, Co, K, Na, Ca, Si, Ti, V, Sn, Ge, Ga, B, As, Zr, or mixtures thereof. The coating layer formation process can be carried out by any coating method (e.g., spray coating, immersion method, etc.), provided that the compound can be coated with these elements in a way that does not adversely affect the properties of the positive electrode active material. This process is well understood by those skilled in the art and is therefore omitted herein.

Specific examples of the above coating layer includes Li₂O-ZrO₂.

The solid electrolyte included in the positive electrode active material layer (14) may be the same as or different from the solid electrolyte included in the solid electrolyte layer (30) described later.

Additionally, the positive electrode layer (14) may comprise not only the positive electrode active material and the solid electrolyte described above, but also any suitable combinations of additives, such as, for example, conductive agents, binders, fillers, dispersants, or ionic conductivity aids.

The conductive agent may be, for example, graphite, carbon black, acetylene black, ketjen black, carbon fiber, or metal powder. The binder (binding agent) may also comprise, for example, styrene butadiene rubber (SBR), polytetrafluoroethylene, polyvinylidene fluoride, or polyethylene. In addition, the filler, dispersant, or ionic conductivity aid may be any of the materials typically used for the electrodes of all-solid-state lithium-ion secondary batteries.

### (2) Negative electrode

The negative electrode (20) may include a negative electrode current collector (22) and a negative electrode active material layer (24) disposed in sequence toward the positive electrode (10).

The negative electrode current collector (22) may be a plate or foil. The negative electrode current collector (22) can include a material that does not react with lithium, that is, does not form any of the alloys and compounds with lithium. Materials consisting of the negative electrode current collector (22) include, for example, copper, stainless steel, titanium, iron, cobalt, and nickel. The negative electrode current collector (22) may be composed of one of these metals, or may be composed of an alloy of two or more metals or a clad material.

The negative electrode active material layer (24) may not contain lithium in the negative electrode current collector (22), the negative electrode active material layer (24), or between the negative electrode active material layer (24) and the solid electrolyte layer (30) in an initial state or in a state after a full discharge. As described below, when the all-solid-state lithium-ion secondary battery (100) according to one embodiment is overcharged, the active material contained in the negative electrode active material layer (24) and the lithium ions that have migrated from the positive electrode (10) may form an alloy or compound, and a metal layer (26) having lithium as a main component may be formed (precipitated) on the negative electrode (20), as shown in FIG. 2. The metal layer (26) may be precipitated and disposed between the negative electrode current collector (22) and the negative electrode active material layer (24), inside the negative electrode active material layer (24), or both of them. Between the negative electrode current collector layer (22) and the negative electrode active material layer (24), the lithium-based metal layer (26) may be disposed closer to the negative electrode current collector layer (22) than to the negative electrode active material layer (24).

The negative electrode active material layer (24) may include carbon material particles, metal oxide particles, and a binder. By including the binder (binding agent), the negative electrode active material layer (24) can be stabilized on the negative electrode current collector (22). Materials constituting the binder (binding agent) include, for example, styrene butadiene rubber (SBR), polytetrafluoroethylene, polyvinylidene fluoride, polyethylene, and other resin materials. The binder (binding agent) may comprise one or more selected from these resin materials.

The negative electrode active material layer (24) may also be suitably formulated with conventional additives used in all-solid-state lithium-ion secondary batteries, such as fillers, dispersants, or ionic conductors. Specific examples of the additives are the same as those described above for the positive electrode.

The overall thickness of the negative electrode active material layer (24) is not particularly limited, but may be 1 µm to 100 µm, or 10 µm to 60 µm. If the thickness of the negative electrode active material layer (24) is less than 1 µm, the performance of the all-solid-state secondary battery may not be sufficiently improved. If the thickness of the negative electrode active material layer (24) exceeds 100 µm, the resistance of the negative electrode active material layer (24) may be high, and consequently, the performance of the all-solid-state secondary battery may not be sufficiently improved. By using the binder described above, the thickness of the negative electrode active material layer (24) can be easily secured at an appropriate level.

Meanwhile, the negative electrode current collector (22) may further comprise a film comprising a material capable of forming an alloy or compound with lithium, wherein the film may be disposed between the negative electrode current collector (22) and the negative electrode active material layer.

The negative electrode current collector (22) does not react with lithium metal, but may make it difficult to precipitate a smooth layer of lithium metal on top. The film may also be used as a wetting layer to allow the lithium metal to precipitate smoothly on top of the negative electrode current collector (22).

Materials capable of forming an alloy with the lithium metal used in the film may include silicon, magnesium, aluminum, lead, silver, tin, or combinations thereof. Materials capable of forming a compound with the lithium metal used in the film may include carbon, titanium sulfide, iron sulfide, or combinations thereof. The content of the material used in the film may be in small amounts without affecting the electrochemical properties of the electrode and/or the redox potential of the electrode. The film may be applied flatly on the negative electrode current collector (22) to prevent cracking during the charging cycle of the all-solid-state lithium-ion secondary battery (100). The application of the film may be carried out by physical deposition, such as evaporation or sputtering, chemical deposition, or plating.

The thickness of the film may be 1 nm to 500 nm. The thickness of the film may be, for example, 2 nm to 400 nm. The thickness of the film may be, for example, 3 nm to 300 nm. The thickness of the film may be, for example, 4 nm to 200 nm. The thickness of the film may be, for example, 5 nm to 100 nm.

### (3) Solid electrolyte layer

The solid electrolyte layer (30) is disposed between the positive electrode (10) and the negative electrode (20) (e.g., between the positive electrode active material layer (14) and the negative electrode active material layer (24)). The solid electrolyte layer (30) includes a solid electrolyte capable of moving ions. The solid electrolyte layer (30) may include a sulfide-based solid electrolyte.

The sulfide-based solid electrolyte may include Li₂S-P₂S₅, Li₂S-P₂S₅-LiX (wherein X is a halogen atom), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are positive numbers, and Z is any one of Ge, Zn and Ga), Li₂S-GeS₂, Li₂S-SiS₂-Li₃PO₄, Li₂S-SiS₂-LiₚMO_{q} (wherein p and q are positive numbers, and M is any one of P, Si, Ge, B, Al, Ga and In), or combinations thereof. The solid electrolyte may comprise one material, or two or more materials selected from these sulfide-based solid electrolyte materials.

The sulfide-based solid electrolyte may include a solid electrolyte represented by Formula 1 below:

<Formula 1> LiₓM'yPS_{z}A_{w},

wherein x, y, z, and w are independently greater than or equal to 0 and less than or equal to 6;
M' is at least one of As, Ge, Ga, Sb, Si, Sn, Al, In, Ti, V, Nb, and Ta;
A is at least one of F, Cl, Br, and I.

As the solid electrolyte, it is possible to utilize sulfur (S), phosphorus (P), and lithium (Li) among the sulfide solid electrolyte materials as components. For example, a material including Li₂S-P₂S₅ can be utilized. When utilizing a material comprising Li₂S-P₂S₅ as a sulfide-based solid electrolyte material, the mixed molar ratio of Li₂S to P₂S₅ may be selected in the range of, for example, Li₂S:P₂S₅ = 50:50 to 90:10.

Solid electrolyte can also be amorphous or crystalline. It can also be a mixture of amorphous and crystalline.

The solid electrolyte layer (30) may further comprise a binder (binding agent). Examples of such binder materials include resins such as styrene butadiene rubber (SBR), polytetrafluoroethylene, polyvinylidene fluoride, polyethylene, or polyacrylic acid. The binder (binding agent) material may be the same as or different from the material constituting the binder (binding agent) in the positive electrode active material layer (14) and the negative electrode active material layer (24).

### (4) Composition of an all-solid-state lithium-ion secondary battery

The all-solid-state lithium-ion secondary battery (100) of the present invention may be an all-solid-state lithium-ion secondary battery (100) comprising a positive electrode (10), a solid electrolyte layer (30), and a negative electrode (20), in that order, as shown in FIG. 1. The negative electrode (20) includes a negative electrode current collector (22) and a negative electrode active material layer (24).

The negative electrode current collector (22) may include Ni foil, Ni coated Cu foil, stainless steel foil, or a combination thereof. Such a negative electrode current collector (22) may further improve the discharge capacity.

### <Method of manufacturing an all-solid-state lithium-ion secondary battery>

Next, a manufacturing method of the above all-solid-state lithium-ion secondary battery (100) is described. The all-solid-state lithium-ion secondary battery (100) according to one embodiment can be obtained by preparing the positive electrode (10), the negative electrode (20), and the solid electrolyte layer (30), respectively, and then stacking the above layers.

### (1) Positive electrode manufacturing process

The positive electrode fabrication process is described as follows. First, the materials comprising the positive electrode active material layer (14) (positive electrode active material, binder (binding agent), etc.) are added to a non-polar solvent to form a slurry (or a paste). The obtained slurry is then applied to the prepared positive electrode current collector (12). This is dried to obtain a laminate. The laminate is then pressurized, for example using hydrostatic pressure, to obtain the positive electrode (10). In this case, the pressurization process is omitted.

### (2) Negative electrode manufacturing process

The negative electrode fabrication process is described as follows. First, the materials constituting the negative electrode active material layer (24) (carbon material particles, metal oxide particles, and a binder) to a polar solvent or a non-polar solvent to prepare a slurry (alternatively a paste). The obtained slurry is then applied to the prepared negative electrode current collector (22) to form a negative electrode active material layer.

If the negative electrode active material layer further comprises one or more layers, the additional layers may be stacked in the same manner as above.

The laminate obtained by the above method is then pressurized, for example, using hydrostatic pressure, to produce the negative electrode (20). The pressurization process may be preferably omitted. Furthermore, the method of applying the slurry to the negative electrode current collector (22) is not particularly limited, and may include, for example, screen printing, metal mask printing, electrostatic painting, dip coating, spray coating, roll coating, doctor blade, gravure coating, and the like.

The method of forming the negative electrode active material layer in two layers was described above, but even if additional layers are to be formed, the negative electrode can be manufactured by preparing a slurry to form each layer and sequentially stacking each layer according to the stacking sequence in the method described above.

### (3) Solid electrolyte layer manufacturing process

The solid electrolyte layer (30) can be fabricated by a solid electrolyte comprising, for example, a sulfide-based solid electrolyte material.

First, the starting material (e.g., Li₂S, P₂S₅, etc.) is processed by a melt quenching method or a mechanical milling method to obtain a sulfide-based solid electrolyte material. For example, when the melt quenching method is used, the starting materials are mixed in a predetermined amount, pelletized, reacted at a predetermined reaction temperature in a vacuum, and then quenched to produce a sulfide-based solid electrolyte material. Further, the reaction temperature of the mixture of Li₂S and P₂S₅ may be 400°C to 1000°C, such as 800°C to 900°C. Further, the reaction time may be 0.1 hour to 12 hours, such as 1 hour to 12 hours. Further, the quenching temperature of the reactants may be 10°C or less, such as 0°C or less, and the quenching rate may be typically 1°C/sec to 10000°C/sec, such as 1°C/sec to 1000°C/sec.

In addition, when the mechanical milling method is used, the sulfide-based solid electrolyte material can be prepared by stirring and reacting the starting material using a ball mill or the like. In addition, the stirring speed and stirring time of the mechanical milling method are not particularly limited, but the faster the stirring speed, the faster the sulfide-based solid electrolyte material can be produced, and the longer the stirring time, the higher the conversion rate of the raw material to the sulfide-based solid electrolyte material.

The obtained mixed raw material (sulfide-based solid electrolyte material) is then subjected to heat treatment at a predetermined temperature and crushed to produce a particle-shaped solid electrolyte. If the solid electrolyte has a glass transition point, it may be changed from amorphous to crystalline by heat treatment.

The solid electrolyte obtained by the above method can then be used to prepare a solid electrolyte layer (30) by coating using a known coating method, for example, an aerosol positioning method, a cold spray method, a sputtering method, and the like. The solid electrolyte (30) layer may also be prepared by pressurizing the solid electrolyte particles. The solid electrolyte layer (30) can also be prepared by mixing the solid electrolyte with a solvent and a binder and applying drying and pressurizing to prepare the solid electrolyte layer(30).

### (4) Laminating process

An all-solid-state lithium-ion secondary battery (100) according to one embodiment can be obtained by disposing a solid electrolyte layer (30) between the positive electrode (10) and the negative electrode (20), and pressurizing it using, for example, hydrostatic pressure.

The all-solid-state lithium-ion secondary battery (100) of the present invention does not require high external pressure to be applied using an end plate, and can provide improved discharge capacity even if the external pressure applied to the positive electrode (10), negative electrode (20), and solid electrolyte layer (30) is 1 MPa or less in use.

### <Charging method of all-solid-state lithium-ion secondary battery>

Next, a charging method for the all-solid-state lithium-ion secondary battery (100) is provided as follows.

A method of charging the all-solid-state lithium-ion secondary battery (100), according to one embodiment, may comprise charging the all-solid-state lithium-ion secondary battery (100) beyond the charging capacity of the negative electrode active material layer (24) (i.e., overcharging).

In the early stage of charging, lithium may be adsorbed within the negative electrode active material layer (24). If the charge exceeds the charge capacity of the negative electrode active material layer (24), lithium may be precipitated on the back side of the negative electrode active material layer (24), that is, between the negative electrode current collector (22) and the negative electrode active material layer (24), and the lithium may form a metal layer (26) that was not present at the time of manufacture, as shown in FIG. 2. During discharge, the lithium in the negative electrode active material layer (24) and the metal layer (26) can be ionized and migrate to the positive electrode (10) side. Thus, in the all-solid-state lithium-ion secondary battery (100) of the present invention, lithium can be used as the negative electrode active material. Furthermore, since the negative electrode active material layer (24) coats the metal layer (26), it can function as a protective layer for the metal layer (26) and at the same time inhibit the precipitation and growth of dendritic metallic lithium. In this way, the short circuit and capacity degradation of the all-solid-state lithium-ion secondary battery (100) can be suppressed, and furthermore, the characteristics of the all-solid-state lithium-ion secondary battery (100) can be improved. Furthermore, according to one embodiment, since the metal layer (26) is not pre-formed, the manufacturing cost of the all-solid-state lithium-ion secondary battery (100) can be reduced.

Furthermore, the metal layer (26) is not limited to being formed between the negative electrode current collector (22) and the negative electrode active material layer (24) as shown in FIG. 2, but may also be formed inside the negative electrode active material layer (24). Also, the metal layer (26) may be formed both between the negative electrode current collector (22) and the negative electrode active material layer (24) and on the interior of the negative electrode active material layer (24).

The all-solid-state lithium-ion secondary battery (100) of the present invention may be fabricated as a unit cell with a structure of positive electrode/separator/negative electrode, a bicell with a structure of positive electrode/separator/negative electrode/separator/positive electrode, or a stacked cell in which the structure of the unit cell is repeated.

The shape of the all-solid-state lithium-ion secondary battery (100) of the present invention is not particularly limited, and can be, for example, coin-shaped, button-shaped, sheet-shaped, stacked, cylindrical, flat, horn-shaped, and the like. It can also be applied to large-scale batteries used in electric vehicles. For example, the all-solid-state lithium-ion secondary battery (100) can be used in a hybrid vehicle such as a plug-in hybrid electric vehicle (PHEV). They can also be used in applications that require large amounts of power storage. For example, it can be used in electric bicycles or power tools.

### [Mode for Practicing the Invention]

Hereinafter, embodiments are provided in order to illustrate the present invention in detail. However, embodiments according to the present invention may be modified in many other ways, and the scope of the present invention should not be construed to be limited to the embodiments described below. The embodiments of the present invention are provided to more fully illustrate the present invention to one of ordinary skill in the art.

### Preparation Example 1: Selection of a carbon material sample with oxygen functional groups introduced

Various types of carbon materials available in the market were purchased, the oxygen content in each carbon material was analyzed as follows, and carbon black with 5.2 at% oxygen (sample 1), carbon black with 2.6 at% oxygen (sample 2), and carbon black with 1.3 at% oxygen (sample 3) were selected.

### <Analysis method>

### (1) Analyzer

### Using K-Alpha (Thermo Fisher Scientific), an optoelectronic spectrometer (XPS or ESCA)

### (2) Analysis method

First, a Survey scan spectrum and a Narrow scan spectrum were obtained for each sample. The above narrow scan spectrum was measured at 4 points for each location, and the average and deviation were obtained.

### (3) ESCA common experimental conditions

X-ray source: Monochromated Al Ka (1486.6 eV)
X-ray spot size: 400 µm
Operation mode: Constant Analyzer Energy (CAE) mode
Survey scan: pass energy 200 eV, energy step 1 eV
Narrow scan: scanned mode, pass energy 50 eV, energy step 0.1 eV
Charge compensation: flood gun off
SF: Al THERMO1, ECF: TPP-2M, BG subtraction: Smart

**[Table 1]**

| | Carbon black sample 1 | | Carbon black sample 2 | | Carbon black sample 3 | |
|---|---|---|---|---|---|---|
| Component | Average (at%) | Deviation | Average (at%) | Deviation | Average (at%) | Deviation |
| O | 5.2 | 0.1 | 2.6 | 0.2 | 1.3 | 0.2 |
| C | 94.5 | 0.1 | 97.2 | 0.2 | 98.3 | 0.2 |
| S | 0.3 | 0.04 | 0.3 | 0.03 | 0.4 | 0.04 |

### Example 1-1: Preparation of negative electrode active material slurry

6 g of carbon black (with an oxygen concentration of 5.2 at%) with a particle size (D50) of 41 nm, 2 g of Al₂O₃ with a particle size (D50) of 10 nm to 20 nm, 9.33 g of PVdF binder (6% solids), and 6 g of NMP solvent were placed in a Thinky mixer container and mixed 12 times for 3 minutes at 1800 rpm. Then, 6 g of NMP solvent was added and mixed 5 times at 1800 rpm for 3 minutes to prepare the negative electrode active material slurry of Example 1.

### Example 1-2: Preparation of negative electrode active material slurry

The negative electrode active material slurry was prepared in the same manner as in Example 1, except that TiO₂ with a particle size (D50) of 10 nm to 20 nm was used instead of Al₂O₃ with a particle size (D50) of 10 nm to 20 nm.

### Example 1-3: Preparation of negative electrode active material slurry

The negative electrode active material slurry was prepared in the same manner as in Example 1, except that SiO₂ with a particle size (D50) of 10 nm to 20 nm was used instead of Al₂O₃ with a particle size (D50) of 10 nm to 20 nm.

### Example 1-4: Preparation of negative electrode active material slurry

The negative electrode active material slurry was prepared in the same manner as in Example 1, except that carbon black (with an oxygen concentration of 2.6 at%) with a particle size (D50) of 50 nm was used instead of carbon black (with an oxygen concentration of 5.2 at%).

### Example 1-5: Preparation of negative electrode active material slurry

The negative electrode active material slurry was prepared in the same manner as in Example 1, except that carbon black (with an oxygen concentration of 2.6 at%) with a particle size (D50) of 50 nm was used instead of carbon black (with an oxygen concentration of 5.2 at%), and ZnO with a particle size (D50) of 35 nm to 45 nm was used instead of Al₂O₃ with a particle size (D50) of 10 nm to 20 nm.

### Example 1-6: Preparation of negative electrode active material slurry

The negative electrode active material slurry was prepared in the same manner as in Example 1, except that carbon black (with an oxygen concentration of 1.3 at%) with a particle size (D50) of 40 nm was used instead of carbon black (with an oxygen concentration of 5.2 at%), and TiO₂ with a particle size (D50) of 10 nm to 20 nm was used instead of Al₂O₃ with a particle size (D50) of 10 nm to 20 nm.

### Example 1-7: Preparation of negative electrode active material slurry

The negative electrode active material slurry was prepared in the same manner as in Example 1, except that carbon black (with an oxygen concentration of 1.3 at%) with a particle size (D50) of 40 nm was used instead of carbon black (with an oxygen concentration of 5.2 at%), and ZnO with a particle size (D50) of 35 nm to 45 nm was used instead of Al₂O₃ with a particle size (D50) of 10 nm to 20 nm.

### Comparative Example 1-1: Preparation of negative electrode active material slurry

The negative electrode active material slurry of Comparative Example 1 was prepared in the same manner as in Example 1, except that instead of 2 g of Al₂O₃ having a particle size (D50) of 10 nm to 20 nm, 2 g of Ag having a particle size (D50) of 40 nm to 60 nm was used.

### Examples 2-1 to 2-7 and Comparative Example 2-1: Preparation of negative electrode

The negative electrode (1.2 mAh/cm²) of Examples 2-1 to 2-7 and Comparative Example 2-1 was prepared by blade coating each negative electrode active material slurry prepared in Examples 1-1 to 1-7 and Comparative Example 1-1 with a thickness of 10 µm on SUS foil and drying the same.

### Preparation of the all-solid-state lithium-ion secondary battery of Examples 3-1 to 3-7 and Comparative Example 3-1

The pouch-type monocells of Examples 3-1 to 3-7 and Comparative Example 3-1 were fabricated using the positive electrode loaded with 5 mAh/cm² as the positive electrode, the negative electrode fabricated in Examples 2-1 to 2-7 and Comparative Example 2-1 as the negative electrode, and a sulfide-based all-solid-state electrolyte (LPSCI composition) as the electrolyte.

### Experimental Example 1: Evaluation of battery characteristics

The pouch-type monocells of Examples 3-1 to 3-7 and Comparative Example 3-1 were operated at an operating voltage range of 4.25 V to 3.0 V and an operating temperature of 60°C to evaluate their cycling characteristics, and the results are shown in Table 2 below.

**[Table 2]**

| Battery | Active material | Discharge capacity (%) | | | |
|---|---|---|---|---|---|
| | | 0.1 C | 0.33 C | 0.5 C | 0.7 C |
| Comparative Example 3-1 | Carbon black - containing 5.2 at% oxygen | 100 | 97.53 | 92.21 | 82.75 |
| | Ag | | | | |
| Example 3-1 | Carbon black - containing 5.2 at% oxygen | 100 | 97.3 | 92.9 | 85.7 |
| | Al₂O₃ | | | | |
| Example 3-2 | Carbon black - containing 5.2 at% oxygen | 100 | 96.7 | 95.5 | 89.9 |
| | TiO₂ | | | | |
| Example 3-3 | Carbon black - containing 5.2 at% oxygen | 100 | 98.4 | 97.2 | 94.1 |
| | SiO₂ | | | | |
| Example 3-4 | Carbon black - containing 2.6 at% oxygen | 100 | 95.2 | 90.2 | 83.7 |
| | Al₂O₃ | | | | |
| Example 3-5 | Carbon black - containing 2.6 at% oxygen | 100 | 93.4 | 92.1 | 84.9 |
| | ZnO | | | | |
| Example 3-6 | Carbon black - containing 1.3 at% oxygen | 100 | 90.9 | 85.3 | 80.0 |
| | TiO₂ | | | | |
| Example 3-7 | Carbon black - containing 1.3 at% oxygen | 100 | 89.9 | 86.4 | 79.5 |
| | ZnO | | | | |

## Claims

1. A negative electrode comprising a current collector and an active material layer, wherein the active material layer comprises carbon material particles and metal oxide particles.

2. The negative electrode according to claim 1, wherein the metal oxide particles are comprised in an amount of 10 to 50 parts by weight, based on a total weight of 100 parts by weight of carbon material particles and metal oxide particles.

3. The negative electrode according to claim 1, wherein the ratio of the carbon material particle size (D50) to the metal oxide particle size (D50) is 1 : 0.03 to 1.5.

4. The negative electrode according to claim 1, wherein the carbon material particles are amorphous carbon material particles.

5. The negative electrode according to claim 4, wherein the metal oxide is at least one species selected from Al₂O₃, TiO₂, ZnO and SiO₂.

6. The negative electrode according to claim 1, wherein the active material layer comprises 60 to 80% by weight carbon material particles, 10 to 30% by weight metal oxide particles, and 3 to 20% by weight binder.

7. The negative electrode according to claim 1, wherein the carbon material particles comprise 3 to 10 at% oxygen.

8. The negative electrode according to claim 7, wherein the oxygen is present in the form of a functional group bound to the carbon material particles.

9. The negative electrode according to claim 8, wherein the functional group comprises one or more selected from the group consisting of a carboxy group, a hydroxyl group, an ether group, an ester group, an aldehyde group, a carbonyl group, and an amide group.

10. A lithium-ion secondary battery comprising the negative electrode of claim 1; a positive electrode; and an electrolyte disposed between the negative electrode and positive electrode.

11. The lithium-ion secondary battery according to claim 10, wherein the electrolyte comprises a sulfide-based solid electrolyte.

12. The lithium-ion secondary battery according to claim 11, wherein the lithium-ion secondary battery is an anodeless battery.
